# EUROPEAN PATENT APPLICATION

(11) **EP 1 227 380 A2**
(43) Date of publication of application: **31.07.2002**
(21) Application number: 01310066.4
(22) Date of filing: 30.11.2001
(51) Int. Cl.: G05B 19/418

(54) **Collection system for RAM data**

(30) Priority: 04.12.2000 US 729998
(71) Applicant: GENERAL ELECTRIC COMPANY, Schenectady, NY 12345 (US)
(72) Inventor: Childs, Mark, Canton, Georgia 30114 (US); Cournoyer, Mark Andrew, Marietta, Georgia 30067 (US); Hamilton, Patrick John, Marietta, Georgia 30066-3497 (US); Hartmann, Steven Lee, Delmar, New York 12054 (US); Prieskorn, Kent Steven, Smyrna, Georgia 30082 (US); San Nicolas, Anthony John Agui, Kennesaw, Georgia 30144 (US); Sharma, Suresh Kumar, Marietta, Georgia 30062 (US); Kelkar, Rohan, Marietta, Georgia 33067 (US)
(74) Representative: Pedder, James Cuthbert

(57) **Abstract**

A method and system for collecting RAM data from distributed locations is provided. The client-side component includes a collection component that provides various display pages for the entry of RAM data. After a user collects the RAM data, the user inputs the data using the collection component. Periodically, the client-side component transmits the collected RAM data to the server computer. In one embodiment, the collection system sends the RAM data from the client computers to the server computer via electronic mail messages. When the server-side component receives the RAM data, it validates the RAM data and, if valid, automatically stores the RAM data in a database.

## Description

The described technology relates generally to the collection of RAM data and more particularly to the collection of RAM data from remote locations.

The collection of reliability and maintenance data ("RAM data") is especially important for monitoring the performance of various plants, such as power plants and manufacturing plants. These plants may outsource the maintenance of the plant equipment to a maintenance organization that is responsible for the maintenance of all the equipment of the plant. The contract between the plant operators and the maintenance organization may specify minimum performance requirements of the plant. For example, a contract may require that certain equipment be up and running a certain percentage of the time or that the equipment be operating at a certain efficiency. If the equipment does not meet the minimum performance requirements, then the maintenance organization may be penalized. In contrast, if the equipment exceeds the minimum performance requirements, the maintenance organization may receive a bonus. It is important for a maintenance organization to collect reliable RAM data in a timely fashion so that it can evaluate whether the minimum performance requirement will be met and take corrective measures as appropriate. It is also important for a maintenance organization to aggregate the RAM data from various plants so that it has a global view of the performance of the plants that it services. This global view may allow the maintenance organization to take proactive measures at one plant based on RAM data received from another plant.

The plants serviced by a maintenance organization may be located throughout the world. For example, a maintenance organization may service power plants in Asia, Europe, North America, South America, and so on. Traditionally, maintenance organizations have collected RAM data from such diverse locations in a variety of ways because the modes of communications may be relatively primitive at remote locations. The RAM data at a plant may be collected and then sent by special courier or postal courier to the headquarters of the maintenance organization. Alternatively, the RAM data may be provided by placing a telephone call to a representative of the maintenance organization. The maintenance organization then manually enters the RAM data into a database. There are difficulties associated with these ways of collecting RAM data. First, when a courier is used from a plant at a remote location, it may take several days for the RAM data to arrive at the headquarters. Second, the use of the telephone results in many errors as a result of misunderstandings between the parties and incorrect transcriptions. Third, errors in the RAM data that require correction before the RAM data can be used by the maintenance organization occur often. Subsequent communications either via courier or telephone that is needed to correct the errors tend to be time-consuming and error prone. Fourth, errors may occur as the RAM data is input into the database of the maintenance organization. In addition, the telephone services, courier services, and other electronic and non-electronic means for communicating with remote locations may be slow and unreliable.

It would be desirable to have a technique for collecting RAM data from remote locations that would help automate the collection process, facilitate the correcting of errors, and result in a more timely collection of reliable RAM data.
The invention will now be described in greater detail, by way of example, with reference to the drawings, in which:-
Figure 1 illustrates a display page of the client-side component for collecting information relating to a power plant with one or more turbines.
Figure 2 illustrates the display page of the client-side component for collecting information relating to events of a turbine.
Figure 3 illustrates a display page of the client-side component for collecting high-level performance information.
Figure 4 illustrates a display page display the high-level performance data.
Figure 5 is a block diagram illustrating the components of the collection system in one embodiment.
Figure 6 is a block diagram illustrating the structure of the RAM-related databases.
Figure 7 is a block diagram illustrating the tables of the business rules database in one embodiment.
Figure 8 is a block diagram illustrating the tables of acceptable values database into one embodiment.
Figure 9 is a flow diagram illustrating the process of the collection component in one embodiment.
Figure 10 is a flow diagram illustrating the processing of the update acceptable values component of a client computer in one embodiment.
Figure 11 is a flow diagram of the process RAM electronic mail data component of the server computer in one embodiment.
Figure 12 is a flow diagram illustrating the processing of the validate and store RAM data component in one embodiment.
Figure 13 is a flow diagram of the validate RAM data routine in one embodiment.

A method and system for collecting RAM data from distributed locations is provided. In one embodiment, the collection system includes a client-side component and a server-side component. Each plant from which RAM data is collected has a client computer that runs the client-side component. The maintenance organization has a server computer that runs the server-side component. A user, such as an employee of the plant or a representative of the maintenance organization, collects the RAM data at the plant on a periodic basis. This RAM data can be collected in a variety of ways. For example, some equipment may provide display devices that output various measurements, such as number of units processed or hours of operation. The user can manually collect this information from these devices. The client-side component includes a collection component that provides various display pages for the entry of RAM data. After a user collects the RAM data, the user inputs the data using the collection component. Periodically, the client-side component transmits the collected RAM data to the server computer. In one embodiment, the collection system sends the RAM data from the client computers to the server computer via electronic mail messages. The use of electronic mail messages when communicating with plants in countries that are not fully developed is typically more reliable, faster, and cheaper than other forms of communications that may require higher bandwidth. For example, high-speed Internet access is not available in many remote locations. When the server-side component receives the RAM data, it validates the RAM data and, if valid, automatically stores the RAM data in a database. If the RAM data is invalid, then the server-side component sends an error message via electronic mail to the sending client-side component. The user of the client-side component can then correct the error and re-send the RAM data via electronic mail.

The collection system, in one embodiment, includes an update mechanism for updating components of the client-side component and data used by those components via electronic mail. One approach to distributing such updates would be to send a CD-ROM with the update information to each remote location. Such an approach is expensive, time-consuming and requires the users' involvement to effect the updating, which is error prone. The sending of updates via electronic mail avoids these problems. The collection system sends computer code for new and replacement components and updates for various data entry related lists. To minimize data entry errors, the client-side component may provide a client computer with a list of acceptable values when entering a certain type of data. The list of acceptable values may be displayed as drop-down lists associated with a data entry field. These lists of acceptable values quickly become outdated, for example, as new options become available. When updated lists of acceptable values or when new or updated computer code need to be distributed to the client computers, the update mechanism generates an electronic mail message containing instructions for updating the list of acceptable values and computer code. This electronic mail message is then sent to each client computer. When a client computer receives the electronic mail message, it updates its lists and computer code in accordance with the message.

In one embodiment, the collection system collects high-level performance data on a periodic basis (e.g., weekly). The client-side component collects the high-level performance data and sends it to the server-side component via electronic mail. The server-side component stores the high-level performance data for each plant in a database. The high-level performance data may indicate the expected performance and the actual performance of various equipment or of a plant. The collection system may display the high-level performance data using a "ticker tape" metaphor. In particular, the collection system may display an area in which the names of the plants scroll from right to left. The collection system may display adjacent to the plant names a symbol that indicates whether the equipment at the plant is performing worse than expected, as expected, or better than expected. The symbols may be an up arrow to indicate better-than-expected performance, a down arrow to indicate worse-than-expected performance, and a horizontal line to indicate as-expected performance. The symbols may also be displayed in colors such as red, yellow, and green to indicate worse-than-expected performance, as-expected performance, and better-than-expected performance.

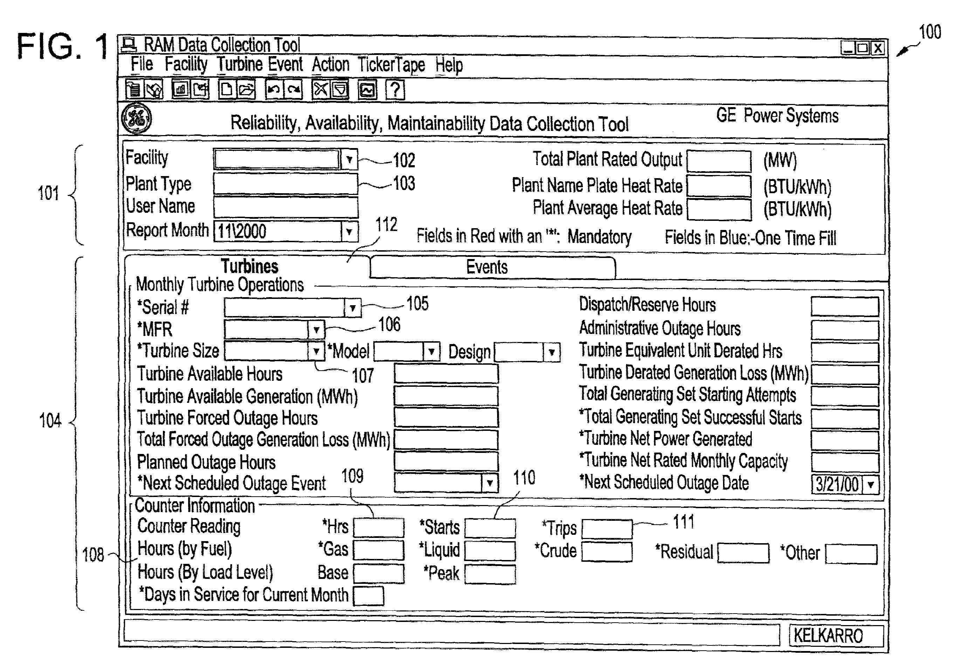

Figure 1 illustrates a display page of the client-side component for collecting information relating to a power plant with one or more turbines. Display page 100 includes overall plant information area 101 and turbine information area 104. The plant information area includes various fields for entry of plant information, such as the name of the facility field 102 and the type of plant field 103. Table 1 contains a description of plant information that may be collected.

**Table 1**

| Plant Information | | |
|---|---|---|
| Field | Characteristics | Description |
| Facility | Mandatory, List of Values, User Entered | Name of the plant |
| User Name | Mandatory, system generated or user Entered | The user Name will default to the userid of the user of the computer. |
| Plant Type | Mandatory, Drop-Down List of Values, User Selected | This field will operate from a drop-down list and the user selects one of the values. The user cannot add values to this list. This drop-down list contains the following values: |
| | | A Simple Cycle |
| | | B Regenerative Cycle |
| | | G Combine Cycle |
| | | H Heat Recovery/Cogeneration (instead of CoGen) |
| | | N Nuclear |
| | | Z Undefined |
| Total Plant Rated Output | Not Mandatory | |
| Plant Rated Heat Rate | Not Mandatory | |
| Average Heat Rate | Not Mandatory | |

The turbine information area contains fields for entry of turbine-related data and may be displayed by selecting the turbine tab 112. The turbine information may include serial number field 105, manufacture identifier field 106, turbine size field 107, and counter information area 108. The counter information area may include hours of operation field 105, number of starts field 110, and number of trips field 111 of the turbine. Table 2 contains a description of turbine information that may be collected.

**Table 2**

| Turbine Information | | |
|---|---|---|
| Field | Characteristics | Description |
| Turbine Serial Number | Mandatory, List of Values, User Entered | This is either a Gas or Steam Turbine Serial Number or a Generator Serial Number |
| MFR | Mandatory, Drop-Down List of Values, User Selected | List of Values: Pratt&Whitney Westinghouse EGT PGT Boilers Only Siemens GE ABB |
| Turbine Frame Size | Mandatory, Drop-Down List of Values, User Selected | This value drives the values of Turbine Model |
| Turbine Model | Mandatory, Drop-Down List of Values, User Selected | This value drives the values of Turbine Design |
| Turbine Design | Mandatory, Drop-Down List of Values, User Selected | |
| Turbine Available Hours (AH) | Not Mandatory, User Entered | Minimum Value: 0 Maximum Value: 744 (31 days x 24 hrs/day) |
| Turbine Available Generation (MWh) | Not Mandatory, User Entered | Minimum Value: 0 Maximum Value: None. |
| Turbine Forced Outage Hours (FOH) | Not Mandatory, User Entered | Minimum Value: 0 Maximum Value: 744 (31 days x 24 hrs/day) |
| Turbine Forced Outage Generation Loss (MWh) | Not Mandatory, User Entered | Minimum Value: 0 Maximum Value: None |
| Planned Outage Hours (FOH) | Not Mandatory, User Entered | Minimum Value: 0 |
| | | Maximum Value: 744 (31 days x 24 hrs/day) |
| Dispatch/Reserver Hrs | Not Mandatory, User Entered | Minimum Value: 0 |
| | | Maximum Value: 744 (31 days x 24 hrs/day) |
| Administrative Outages (AOH) | Not Mandatory, User Entered | Minimum Value: 0 |
| | | Maximum Value: 744 (31 days x 24 hrs/day) |
| Turbine Equivalent Unit Derated Hours (EUNDH) | Not Mandatory, User Entered | Minimum Value: 0 |
| | | Maximum Value: None. |
| Turbine Derated Generation Loss (DG) | Not Mandatory, User Entered | Minimum Value: 0 |
| | | Maximum Value: None. |
| Total Generating Set Successful Starts (SS) | Mandatory, User Entered | Minimum Value: 0 |
| | | Maximum Value: none |
| Turbine Net Power Generated (MWh) | Mandatory, User Entered | Minimum Value: 0 |
| | | Maximum Value: none |
| Turbine Net Rated Monthly Capacity (MWh) | Mandatory, User Entered | Minimum Value: 0 |
| | | Maximum Value: none |
| Next Scheduled Outage Date | Mandatory, User Entered | Format: |
| | | MM/DD/YYYY |
| Next Scheduled Outage Event | Mandatory, Drop-Down List of Values, User Selected | List of Values: |
| | | Combustion |
| | | Inspection |
| | | Hot Gas Path |
| | | Inspection |
| | | Major |
| | | Inspection |
| | | Minor |
| | | Inspection |

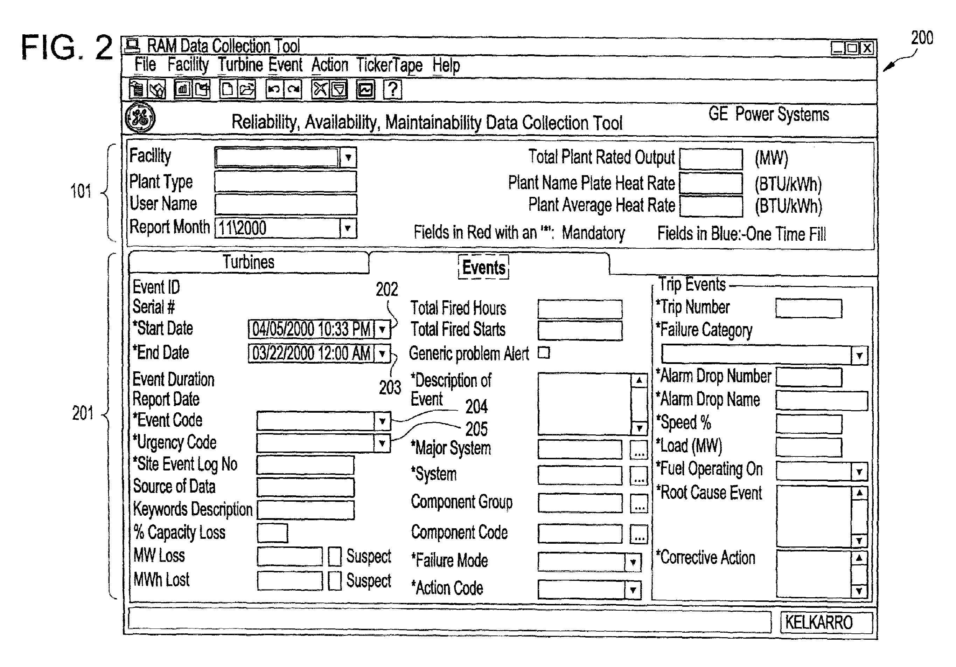

Figure 2 illustrates a display page of the client-side component for collecting information relating to events of a turbine. Display page 200 includes plant information area 101 and event information area 201. The event information area includes data entry fields for event-related information. The event information may include start of event field 202, end of event 203, event code field 204, and urgency code field 205. Some of the data entry fields, such as the event code field, may include a drop-down list of possible values. These lists of possible values may be stored in a database and dynamically changed by the update mechanism. For example, as the collection of information for new types of events can be supported, the collection system may update the list of possible values for the event code. Table 3 contains a description of event information that may be collected.

**Table 3**

| Event Information | | |
|---|---|---|
| Field | Characteristics | Description |
| Turbine Serial Number | Mandatory, associates with the serial number on the Turbine Tab, not allow to enter | |
| Start Date and Time | Mandatory, User Entered | The user enters the date (mm/dd/yyyy) and time (hh:mm:ss) of the start of this particular event. The system will not require the user to enter seconds. If no seconds are entered, the system will default to "00" in the seconds' position. The user will actually select the date from a pop-up calendar. |
| End Date and Time | Mandatory, User Entered | The user enters the date (mm/dd/yyyy) and time (hh:mm:ss) of the end of this particular event. The system will not require the user to enter seconds. If no seconds are entered, the system will default to "00" in the seconds' position. The user will actually select the date from a pop-up calendar. |
| Event Duration | Calculated field, calculation is done by the program | This field determines the difference (in hours) between the Start and End date/times and displays this to help the user in double-checking the information prior to submitting. Note: zero not allowed if there is an event. |
| Report Date | System generated, not allow to change | This field is set by the internal clock of the computer that the end user is using. There is no validation on this field other than a correct date/time. The format will be mm-dd-yyyy hh:mm:ss. |
| Event Code | Mandatory, Drop-Down List of Values, User • Selected | This field determines what type of event this is. Attention: |
| | | Trips are FOA, FOM, FS, and NC, Trip Events enabled when one of these selected |
| | | • The Event Code drives Urgency. If you select FOA, FOM, FU, FS, MU, then you can select an Urgency Code. |
| | | List of Values: |
| | | Event Code Description Type |
| | | FOA Forced Outage - Automatic Trip |
| | | FOM Forced Outage - Manual Trip |
| | | FS Failure to Start - Trip |
| | | FU Forced Unavailability |
| | | MS Maintenance - Scheduled |
| | | MU Maintenance - Unscheduled |
| | | CM Concurrent Maintenance |
| | | NC Non-Curtailing Event - Trip |
| | | DR Derating |
| Urgency Code | Mandatory, Drop-Down List of Values, User Selected | List of Values: |
| | | Urgency Code Description |
| | | 0 Not Applicable or Failure to Start |
| | | 1 Immediate Shutdown Requirement |
| | | 2 Must Shut Down < 6 Hours |
| | | 3 Must Shut Down this Week |
| | | 4 Can Delay Beyond the Weekend |
| Site Event Log Number | Mandatory, User Entered | It is assumed that this field will just be a text field with no validation, capable of accepting alpha-numerics. Length: 50 characters |
| Source of Data | | linked to operating tab |
| Keywords Description | Mandatory | This field was described as defaulting to the "first line of Description or free text". Length: 255 characters |
| Percent Capacity Loss | | if not de-rating from Event Code default to 100% |
| MW Loss | | if not de-rating from Event Code then unit rated capacity |
| MWh Lost | | calculated and displayed and modified * Related for FOA, FOM, FS, FU, MS and MU, these are 100% and <MW Rating * Outrage Hours>. For DR, you can either enter the percent MW lost while still operating (and calculate the MWh Lost) or vice versa. |
| Fired Hours | | counter reading at start of event - fill in *Fired hours counter reading at time of outage. |
| Fired Starts | | *Fired hours counter reading at time of outage. |
| Generic Problem Alert | Check Box, Not Required | Boolean selection "YES/NO" for user to select |
| | | For this event, the user can indicate that this is a generic problem that all other similar units may have. This is just a flag stored in this event record for this turbine for this facility. |
| Descriptio n of Event | Free-form Text, Required | |
| Major System | Mandatory, Drop-Down List of Values, User Selected | Which drives the value of System Code |
| | | List of Values: |
| | | Major System Description |
| | | CF Condensation/Feedwater |
| | | GN Generator - Gas Turbine |
| | | GT Gas Turbine |
| | | HR Heat Recovery Steam Generator |
| | | SE Station BOP |
| | | SE1 Block BOP |
| | | SE2 Dispatch Group BOP |
| | | SN Generator - Steam Turbine |
| | | ST Steam Turbine |
| | | Please refer to the lookup table in: EPRI.mdb |
| System Code | Mandatory, Drop-Down List of Values, User Selected | Which drives the value of Component Group |
| | | List of Values: |
| | | System Code Description |
| | | CO Condensate System |
| | | FW Feedwater System |
| | | AA Atomizing Air |
| | | AD Accessory Drive |
| | | Al. Air Inlet |
| Component Group | Mandatory, Drop-Down List of Values, User Selected | Which drives the value of Component Code |
| | | List of Values: |
| | | Component Group Description |
| | | CN Containers |
| | | EP Electric Power - Pumps |
| | | EV Electric Power Values |
| | | FL Fluid |
| Component Code | Mandatory, Drop-Down List of Values, User Selected | The Component Code does not drive the Failure Code, or any other field |
| | | List of Values: |
| | | Component Code Description |
| | | 001 |
| | | 001 |
| | | 003 |
| Failure Category | Mandatory, Drop-Down List of Values, User Selected | List of values: |
| | | Controls Issue - Sequencing, |
| | | Constants, Tuning |
| | | Device/Instrument Issue - Assy, |
| | | Design, Calibration |
| | | Planned - Overspeed test |
| | | Operations Issue - Procedural. |
| | | Training |
| | | Installation Issue - Assy, |
| | | Worksmanship |
| | | Equipment Issue - Design, |
| | | Worksmanship |
| | | Commissioning Issue - BOP testing, |
| | | Maintenance Activities |
| Fuel Operation On | Mandatory, Drop-Down List of Values, User Selected | List of Values: |
| | | Natural Gas |
| | | LNG Liquid Natural Gas |
| | | Syn Gas |
| | | Gas - Other |
| | | Naphtha |
| | | Light Distillate |
| | | Heavy Distillate |
| | | Light Crude/Residual |
| | | Heavy Crude/Residual |
| Failure Mode | Mandatory, Drop-Down List of Values, User Selected | List of Values: |
| | | Failure Mode Description |
| | | 101 Blue Blush |
| | | 102 Cracked |
| | | 103 Distortion |
| Action Code | Mandatory, Drop-Down List of Values, User Selected | List of Values: |
| | | Action Code Description |
| | | A01 Balanced |
| | | A02 Bored |
| | | . . |
| | | . . |
| | | . . |
| | | A99 |

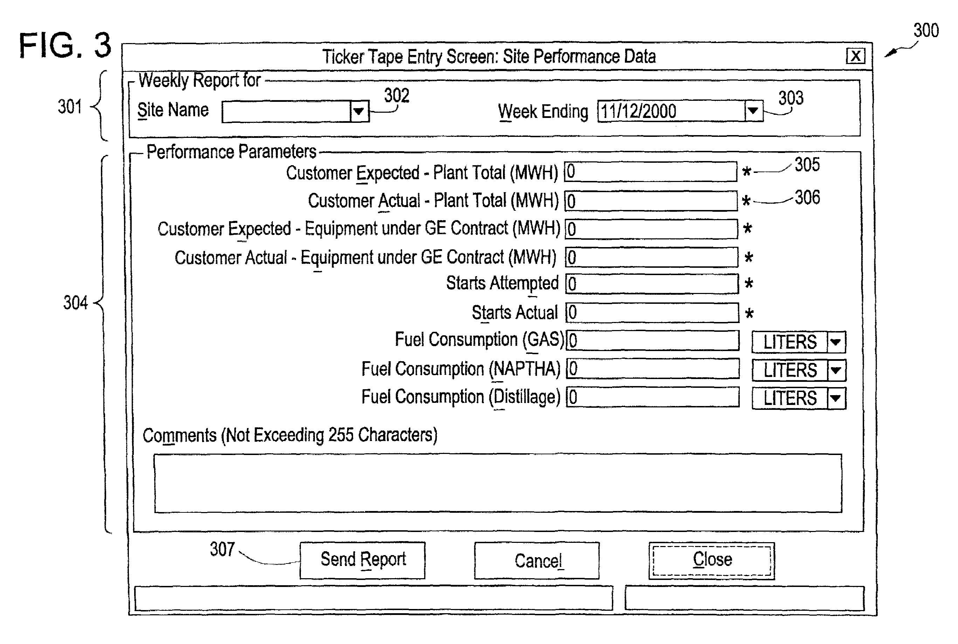

Figure 3 illustrates a display page of the client-side component for collecting high-level performance information. Display page 300 includes a reporting period area 301, a performance parameters area 304, and a send report button 307. The high-level performance information is also referred to as "ticker tape" data. The reporting period area includes a site (i.e., facility or plant) name field 302 and a week ending field 303. The performance parameters area includes a customer expected plant total field 305 and a customer actual plant total field 306. After the user inputs the high-level performance information, the user selects the send report button to transmit the high-level performance information to the server computer.

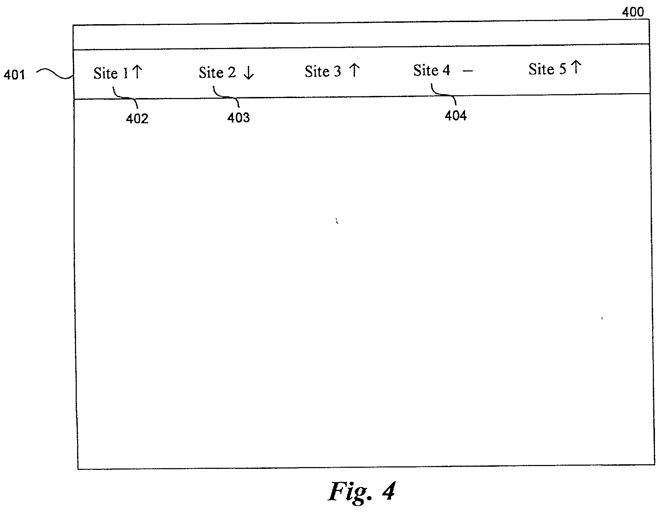

Figure 4 illustrates a display of high-level performance data. Display page 400 includes a ticker tape area 401. The ticker tape area includes the names of various sites that may automatically scroll from the right to the left. Each site name includes an indication of the performance of that site. For example, site name 401 includes an up arrow to indicate that the site is performing better than expected, site name 403 includes a down arrow to indicate that site is performing worse than expected, and site name 404 includes a horizontal line to indicate that the site is performing as expected. In addition, the site names and adjacent symbols may be displayed in various colors to indicate the performance of the site. The site names that scroll may include all sites serviced by the maintenance organization or subsets of those sites as indicated by a site selection query (e.g., all the sites of a single customer).

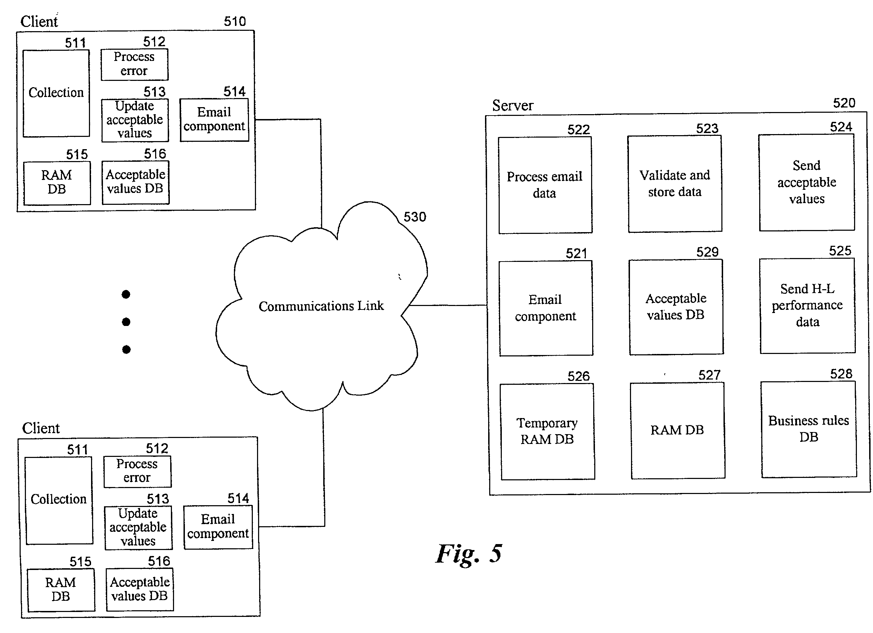

Figure 5 is a block diagram illustrating the components of the collection system in one embodiment. The client computers 510 may be connected to the server computer 520 via a communications link 530. The computers may include a central processing unit, memory, input devices (i.e., keyboard and pointing devices), output devices (i.e., display devices), and storage devices (i.e., disk drives). The memory and storage devices are computer-readable media that may contain instructions that implement the collection system. In addition, the data structures and message structures include requests and responses that may be stored or transmitted via a data transmission medium such as a signal on the communications link. The client computers include a collection component 511, a process error component 512, an update acceptable values component 513, an electronic mail component 514, a RAM database 515, and an acceptable values database 516. The collection component controls the collection of RAM data and high-level performance data. The process error component receives error messages from the server computer and coordinates the correcting of the errors. The update acceptable values component receives indications of revised lists of acceptable values and revised computer code for the components and coordinates the updating. The electronic mail component controls the sending of the electronic mail generated by the collection component and the receiving of electronic mail received from the server computer. The RAM database contains the RAM data and high-level performance data collected by the collection component before the data is sent to the server computer.

The acceptable values database contains the lists of acceptable values for the various data entry fields. The collection component uses the acceptable values database to generated the drop-down lists that are displayed during the collection process. The server computer includes a electronic mail component 521, a process electronic mail data component 522, a validate and store data component 523, a sent acceptable values component 524, a display high-level performance data component 525, a temporary RAM database 526, a RAM database 527, and business rules 528. The electronic mail component coordinates the receiving and sending of electronic mail messages. The process electronic mail data component controls the store of the RAM data in received from the plants in the temporary RAM database. The validate and store data components validates the data stored in the temporary RAM database and, if valid, store the data in the RAM database. The send acceptable values component controls the sending of lists of acceptable values as indicated by the acceptable values database to the client computers. The send high-level performance data component controls the display of the ticker tape. The business rules database contains the validate rules for the RAM data.

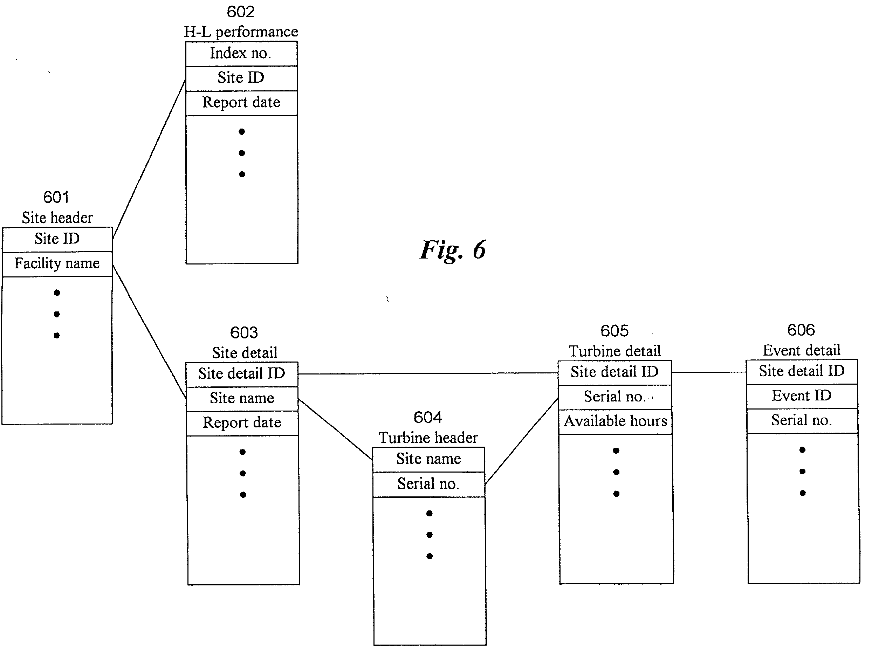

Figure 6 is a block diagram illustrating the structure of the RAM-related databases. The RAM database of the client computers and the temporary RAM database and RAM database of the server computer may have the same structure. The RAM database includes a site header table 601, a high-level performance data table 602, a site detail table 603, a turbine header table 604, a turbine detail table 605, and an event detail table 606. The site header table contains an entry for each site and contains overall static information for that site (e.g., site name). The site detail table contains an entry for each reporting period of each site and contains information relating to that reporting period (e.g., reporting month). The turbine header table contains an entry for each turbine at each site and contains overall static information for that turbine (e.g., serial number). The turbine detail table contains an entry for each turbine at each site for each reporting period and contains the information collected about that turbine for that reporting period (e.g., number a starts). The event detail contains entry for each event associated with each entry of the turbine detail table and contains information relating to the event (e.g., duration). The high-level performance data table contains an entry for each reporting period for each site and contains the high-level performance data for that reporting period (e.g., fuel consumption). Tables 4-9 list the fields of the tables of the RAM database in one embodiment.

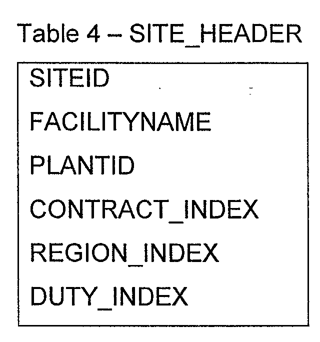

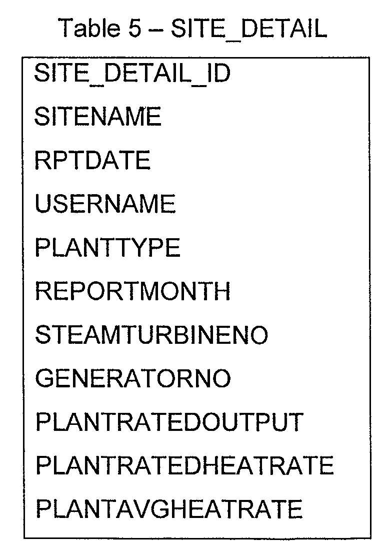

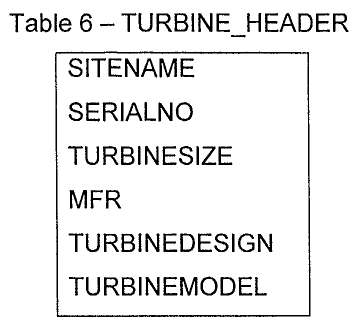

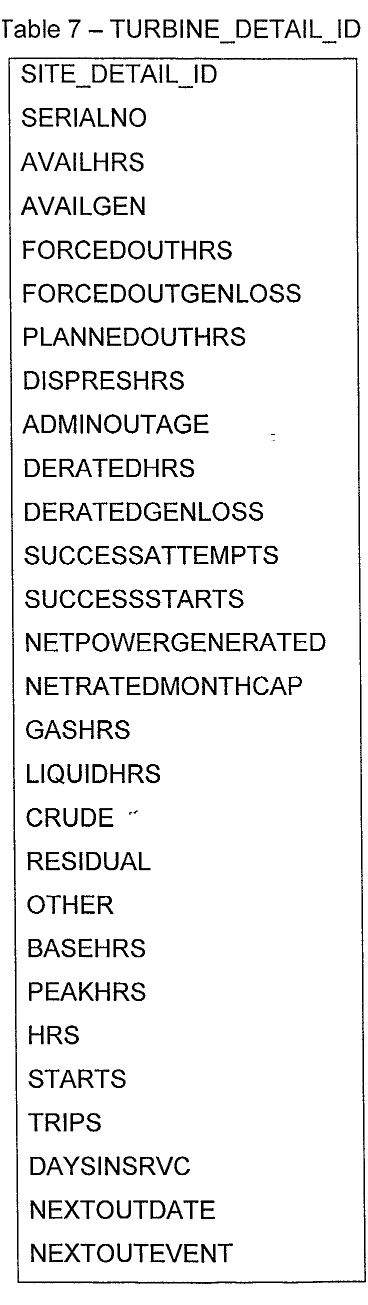

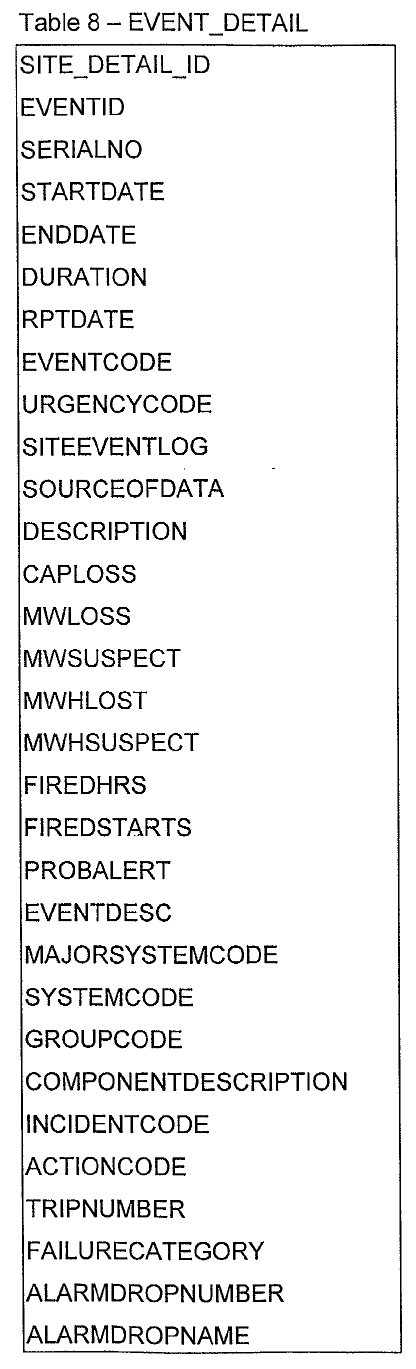

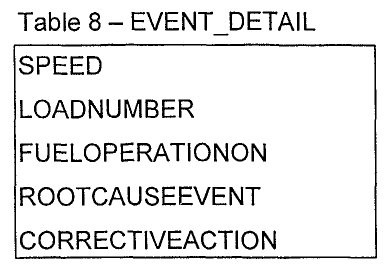

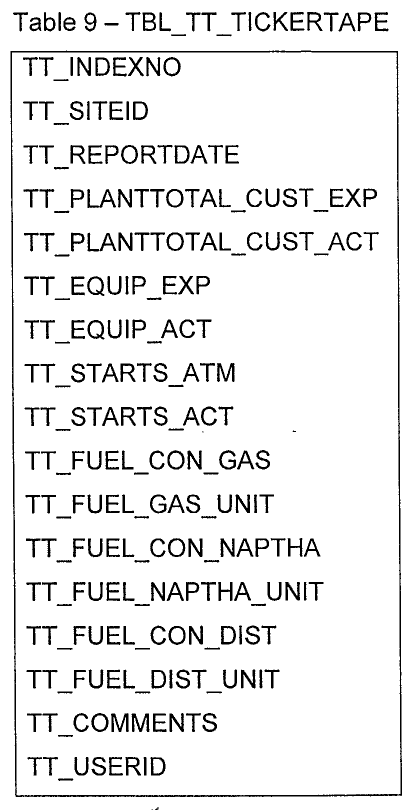

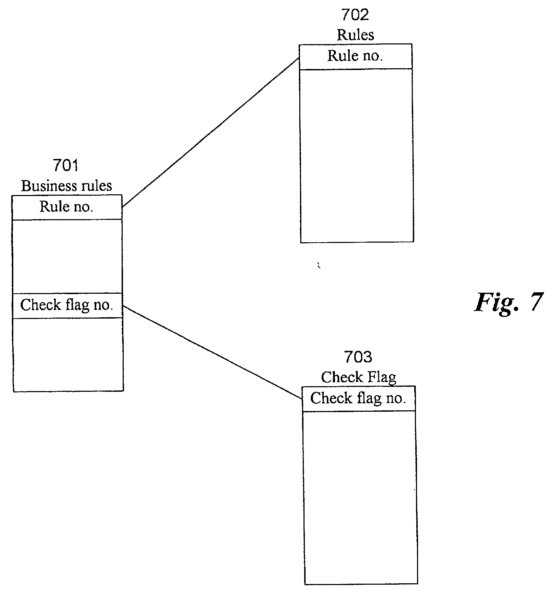

Figure 7 is a block diagram illustrating the tables of the business rules database in one embodiment. The business rules are used by the server-side component to determine whether the RAM data collected from a client computer is valid. The business rules database includes a business rules table 701, a rules table 702, and a check flag table 703. The business rules table contains an entry for each rule that is to be applied to the collected RAM data. The rules table contains an entry for each rule along with a description of that rule. The check flag table contains an entry for the various types of checks to be performed by a rule. For example, a check flag table may contain one entry indicating that the check should be to determine whether the value of a certain field is in a certain table or within a certain percentage of reference value. Tables 10-12 contain a description of the fields of the tables of business rules database.

**Table 10**

| Business Rules Table | | | |
|---|---|---|---|
| Data Input Name | Mandatory | Default Value | Description |
| SN_RULE_NO | True | | Maps to the rules table |
| SN_CHECK_FIELD_NAM E | True | | Check field name for which business rule should apply |
| SN_OPERATOR | | | Operator on which rule works |
| SN_PERCENT_OPERATO R | | | % Operator |
| SN_REF_TABLE | | | Table name from which data is required to validate |
| SN_REF_FIELD | | | |
| SN_CHECK_VALUE | | | Business Standard value |
| SN_CHECK_FLAG_NO | True | | Maps to check flag table |
| SN_MANDATORY | True | | Tells the compulsion of validity of this rule. |
| SN_LAST_UPD_USER | True | | Name of the user who created/updated the table |
| SN_LAST_UPD_DATE | True | | Date and time when the Created /updated the table |

**Table 11**

| Rules Table | | | |
|---|---|---|---|
| Data Input Name | Mandatory | Default Value | Description |
| SN_RULE_NO | True | | System generated |
| SN_RULE_DESC | True | | Description of Business rule |

**Table 12**

| Check Flag Table | | | |
|---|---|---|---|
| Data Input Name | Mandatory | Default Value | Description |
| SN_CHECK_FLAG_NO | True | | 1 to 4 |
| SN_CHECK_FLAG_DES C | True | | Description of Business rule |
| | | | 1.Check SN_REF_FIELD |
| | | | 2.Check SN_REF_TABLE |
| | | | 3.Check both |
| | | | 4.Check either field or table |

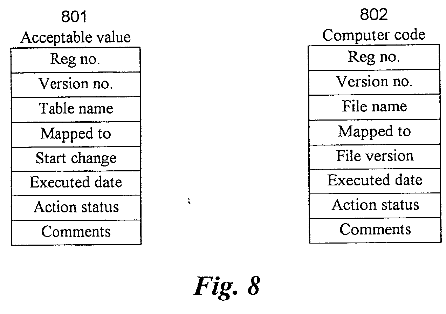

Figure 8 is a block diagram illustrating the tables of acceptable values database in one embodiment. The acceptable value database includes an acceptable value table 801 and a computer code table 802. The acceptable value table contains an entry for each list of acceptable values used by the collection system. The table name field identifies a table that contains the list of acceptable values. The computer code table contains an entry for each component of the collection component of the client-side component. The file name field indicates the name of the file that contains the executable code for that component. Periodically, the server-side component sends the entries of the acceptable value table and the computer code table to the client computers. In one embodiment, these tables may contain only data related to revisions that need to be made to the client computers.

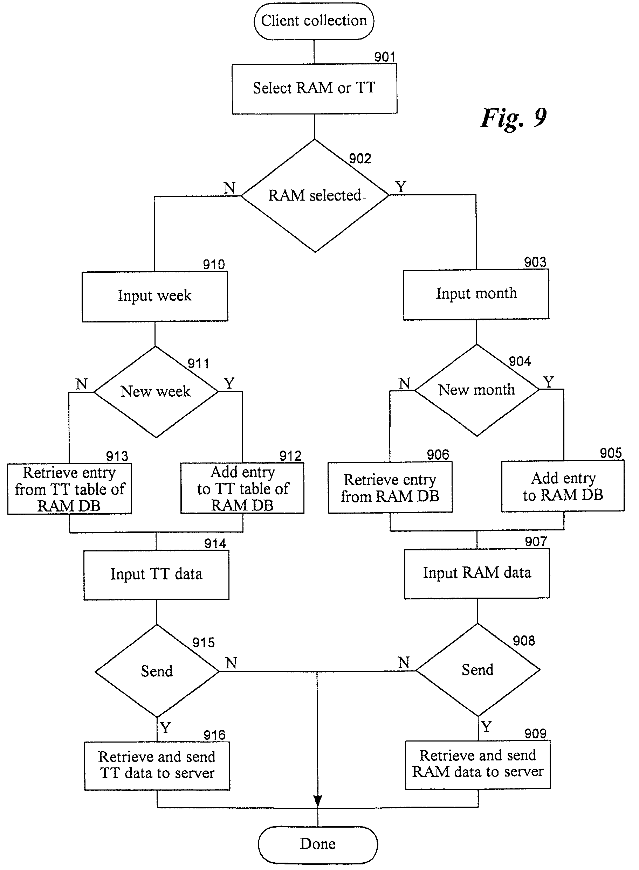

Figure 9 is a flow diagram illustrating the processing of the collection component in one embodiment. The collection component controls the collecting of RAM data and of high-level performance data and sending of the collected data to the server computer. In block 901, the component inputs a user selection to input RAM data or high-level performance data. In decision block 902, if RAM data was selected, then the component continues at block 903, else the component continues at block 910. In block 903, the component inputs the month that the RAM data is to cover. In decision block 904, if the data for the month has not been collected before, then the component continues at block 905, else the component continues at block 906. In block 906, the component adds an entry to the RAM database (i.e., in the site detail table) for the month. In block 906, the component retrieves the entry from the RAM database for the month. In block 907, the component inputs the RAM data. The component may initialize the RAM data entry fields with values previously entered for that month. In decision block 908, if the user selects the send button, then the component continues at block 909, else the component completes. In block 909, the component sends the RAM data that has been collected for that month to the server computer and then completes. In block 910, the component inputs the week that the high-level performance data is to cover. In decision block 911, if the data for that week has not been collected before, then the component continues at block 912, else the component continues at block 913. In block 912, the component adds an entry to the high-level performance data table of the RAM database. In block 913, the component retrieves the entry from the high-level performance data table of the RAM database for the week. In block 914, the component inputs the high-level performance data. The component may initialize the high-level performance data entry fields with data previously collected for that week. In decision block 915, if the user selects the send button, then the component continues at block 916, else the component completes. In block 916, the component sends the collected high-level performance data for that week to the server computer and then completes

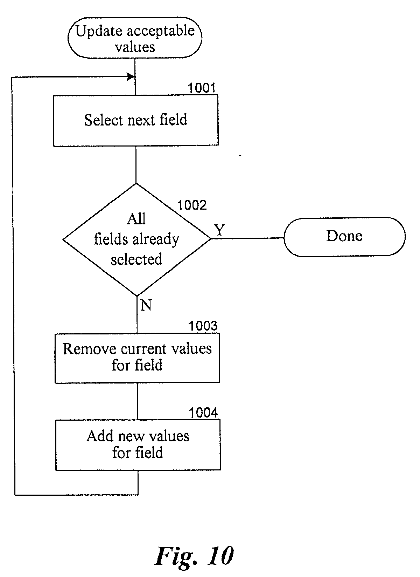

Figure 10 is a flow diagram illustrating the processing of the update acceptable values component of a client computer in one embodiment. In block 1001, the component selects the next field whose list is to be updated. In decision block 1002, if all the fields have already been selected, then the component completes, else the component continues at block 1003. In block 1003, the component clears the list of current values for the field. In block 1004, the component adds the list of new values for the field to the acceptable value database. The component then loops to block 1001 to select the next field.

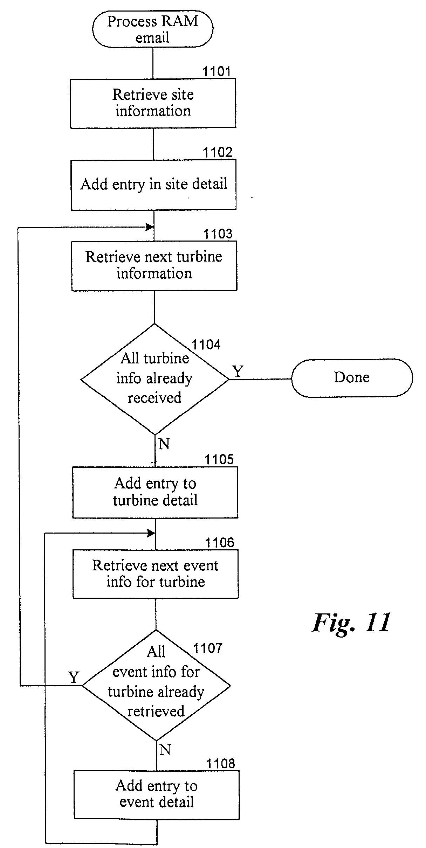

Figure 11 is a flow diagram of the process RAM electronic mail data component of the server computer in one embodiment. This component parses an electronic mail message containing RAM data and stores the data in the temporary RAM database. Table 13 contains an example of an electronic mail message with RAM data.

**Table 13**

| SITE INFORMATION: |
|---|
| FacilityName : East Coast Power |
| Report_date : 03/30/2000 5:37:15 PM |
| Username : jiangma |
| Plant_type : CoGen |
| ... |

| TURBINE INFORMATION : |
|---|
| Turbine_Serial_no : 270T356 |
| Turbine_Design : 11 |
| Turbine_FrameSize: LM5000 |
| Turbine_MFR : Pratt & Whitney |
| Turbine_Model: EA |
| NextOutDate : 03/30/2000 5:37:33 PM |
| NextOutEvent: Trial 2 |
| ... |

| EVENT INFORMATION : |
|---|
| EventID : 2 |
| StartDate : 03/29/2000 5:33:10 PM |
| EndDate : 03/30/2000 5:41:10 PM |
| Duration : 1448 |
| RptDate : 03/30/2000 5:41:39 PM |
| EventCode : DR |
| UrgencyCode : 1 |
| ... |

In block 1101, the component retrieves the site information from the electronic mail message. In block 1102, the component adds an entry to the site detail table corresponding to the reporting period represented by the site information. In blocks 1103-1108, the component loops processing the information for each turbine and for each event of the turbine represented in the electronic mail message. In block 1103, the component retrieves the information for the next turbine. In block 1104, if information for all the turbines has already been retrieved, then the component completes, else the component continues at block 1105. In block 1105, the component adds an entry to the turbine detail table corresponding to the retrieved information. In blocks 1106-1108, the component loops processing information for each event related to that turbine. In block 1106, the component retrieves the next event information for that turbine. In decision block 1107, if all the event information for that turbine has already been retrieved, then the component loops to block 1103 to select the information for the next turbine, else the component continues at block 1108. In block 1108, the component adds an entry to the event detail table corresponding to the retrieved event and then loops to block 1106 to retrieve the next event information.

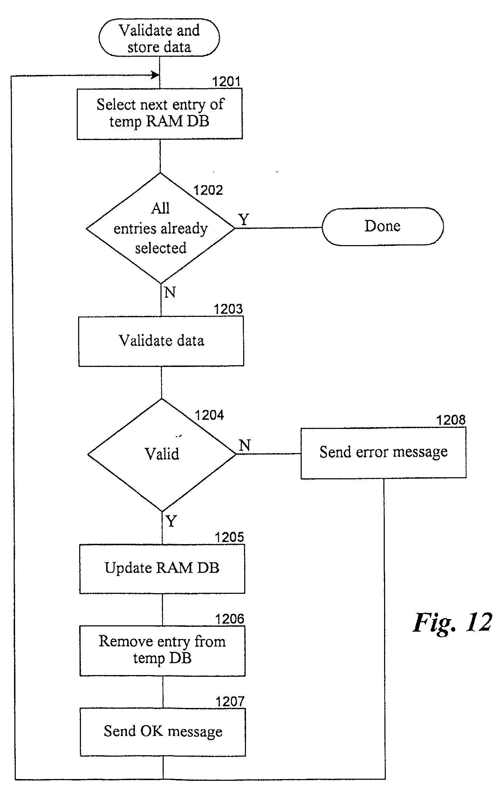

Figure 12 is a flow diagram illustrating the processing of the validate and store RAM data component in one embodiment. This component retrieves the data from the temporary database, validates the data, and stores the valid data in the RAM database. In block 1201, the component retrieves the next entry in the site table of the temporary RAM database. If all the entries have already been selected, then the component completes, else the component continues at block 1203. In block 1203, the component validates the data relating to the selected entry (e.g., the data in the turbine detail table and the event detail table). In decision block 1204, if the data is valid, then the component continues at block 1205, else the component continues at block 1208. In block 1205, the component updates the RAM database with the data for the selected entry. In block 1206, the component removes the data relating to the selected entry from the temporary RAM database. In block 1207, the component sends an okay message to the client computer and loops to block 1201 to select the next entry. In block 1208, the component sends an error message to the client computer and loops to block 1201 to select the next entry.

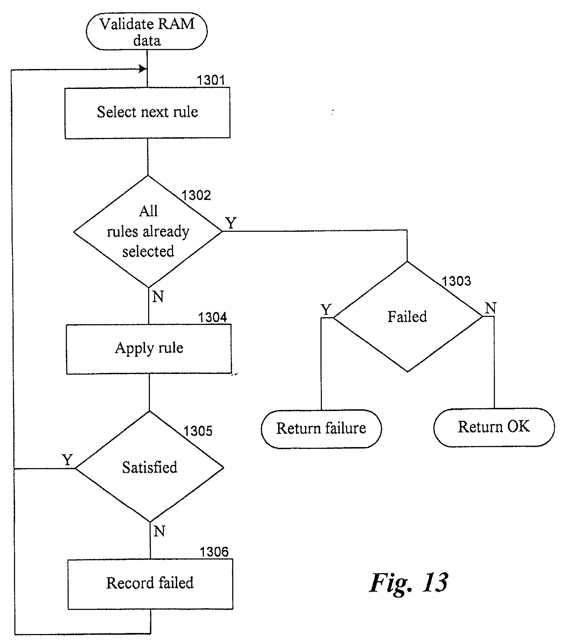

Figure 13 is a flow diagram of the validate RAM data routine in one embodiment. This routine is invoked by the validate and store RAM data component. This routine loops selecting each of the business rules and applying the rules to the RAM data. In block 1301, the routine selects the next rule. In decision block 1302, if all the rules have already been selected, then the routine continues at block 1303, else the routine continues at block 1304. In decision block 1303, if at least one of the rules failed, then the routine returns a failure indication, else the routine returns a success indication. In block 1304, the routine applies the selected rule to the data. In decision block 1305, if the selected rule is satisfied, then the routine loops to block 1301 to select the next rule, else the routine continues at block 1306. In block 1306, the routine records the failure and loops to block 1301 to select the next rule.

From the foregoing, it will be appreciated that although embodiments of the collection system have been described for purposes of illustration, various modifications may be made without deviating from the scope of the invention. For example, the collection system may not allow a user to enter RAM data unless RAM data for a previous collection period is entered. When the collection system is initially installed, it may require that the user enter RAM data for the previous collection period. Also, a single client computer may collect data for multiple facilities or for a single facility, and each facility may have one or more turbines.

For the sake of good order, various aspects of the invention are set out in the following clauses:-
1. A computer system for collecting RAM data from distributed locations, comprising:
   a plurality of RAM collection clients (501) that provide a user interface for collecting RAM data for a turbine, the RAM data including event information relating to the turbine, and that send the collected RAM data to a RAM collection server via electronic mail; and
   a RAM collection server (520) that receives RAM data sent via electronic mail from RAM collection clients, that validates the received RAM data, that sends a message to the RAM collection clients indicating whether the received RAM data is valid, and that stores valid RAM data in a RAM database.
2. The computer system of clause 1 wherein a RAM collection client (510) receives from the RAM collection server (520) a list of acceptable values (524) for RAM data and wherein the RAM collection client uses the list of acceptable values to filter values entered by a user.
3. The computer system of clauses 1-2 wherein a RAM collection client (510) collects data covering sequential periods and does not allow collecting of RAM data for a period unless RAM data for the prior period was collected.
4. The computer system of clauses 1-3 wherein a RAM collection client (510) stores collected RAM data locally (515) until a user indicates to send the collected RAM data.
5. The computer system of clauses 1-4 wherein a RAM collection client (510) reports when a electronic mail message is received from the RAM collection server (520) indicating that the received RAM data is not valid (1208).
6. The computer system of clauses 1-5 wherein the RAM collection server (520) validates the received RAM data using business rules stored in a table (702).
7. The computer system of clauses 1-6 wherein the RAM collection server (520) displays a ticker tape (400) scrolling on a display device, the ticker tape including a name of each site and a symbol adjacent to the name to indicate performance of the turbines at the site.
8. The computer system of clause 7 wherein an upward pointing symbol (402) indicates better-than-expected performance and a downward pointing symbol (403) indicates worse-than-expected performance.
9. The computer system of clauses 7-8 wherein a horizontally oriented symbol (404) indicates as-expected performance.
10. The computer system of clauses 7-9 wherein the indicated performance is relative to contractually guaranteed level of performance.
11. The computer system of clauses 7-10 wherein the performance relates to megawatt hours.
12. The computer system of clauses 1-11 wherein a RAM collection client (510) includes:
   inputting a value for a field, the input value being in a list of acceptable values for the field;
   receiving from a remote computer a new list of acceptable values for the field; and
   inputting a value for the field, the input value being in the new list of acceptable values
   whereby the acceptable values are dynamically changed (1001-1004) when the new list is received from the remote computer.
13. The computer system of clause 12 wherein the new list of acceptable values is received via an electronic mail message sent from the remote computer.
14. The computer system of clauses 12-13 wherein the inputting of a value includes displaying a list of acceptable values.
15. A computer-readable medium containing instructions for controlling a computer system (520) to collect performance data of power plant, by a method comprising:
   for each of a plurality of power plants,
   receiving (521) via an electronic mail message with performance data for that plant, the performance data covering a period; and
   storing (527) the performance data of the received electronic mail message in association with the power plant based on period covered.
16. The computer-readable medium of clause 15 including:
   determining (1203) whether the received performance data is valid;
   when the received performance data is determined to be not valid, sending (1208) an electronic mail message to the power plant indicating that the performance data is not valid.
17. The computer-readable medium of clauses 15-16 wherein the determining (1203) of whether performance data is valid includes retrieving rules indicating whether data is valid from a table of business rules.
18. The computer-readable medium of clauses 15-17 including when the received performance data is determined to be valid, sending (1207) an electronic mail message to the plant indicating that the performance data is valid.
19. The computer-readable medium of clauses 15-18 wherein the received electronic mail messages include information describing the plant, describing equipment at the plant, and describing events associated with the equipment.
20. The computer-readable medium of clauses 15-19 wherein the electronic mail message sent to the plant indicates that the performance data is not valid includes the performance data.
21. The computer-readable medium of clauses 15-20 including displaying a ticker tape (401) scrolling on a display device, the ticker tape including a name of each plant and a symbol adjacent to the name to indicate performance of the equipment at the plant.
22. The computer-readable medium of clause 21 wherein an upward pointing symbol (402) indicates better-than-expected performance and a downward pointing symbol (403) indicates worse-than-expected performance.
23. The computer-readable medium of clauses 21-22 wherein a horizontally oriented symbol (404) indicates as-expected performance.
24. The computer-readable medium of clauses 21-23 wherein the indicated performance is relative to contractually guaranteed level of performance.
25. A method in a computer system (520) for collecting RAM data, the method comprising:
   for each of a plurality of sites,
   receiving (521) via an electronic mail message RAM data for that site, the RAM data covering a period;
   determining (1203) whether the received RAM data is valid;
   when the received RAM data is determined to be not valid, sending (1208) an electronic mail message to the site indicating that the RAM data is not valid; and
   storing valid RAM data in a database (527) .
26. The method of clause 25 wherein the determining (1203) of whether RAM data is valid includes retrieving rules indicating whether data is valid from a table of business rules.
27. The method of clauses 25-26 including when the received RAM data is determined to be valid, sending (1207) an electronic mail message to the site indicating that the RAM data is valid.
28. The method of clauses 25-27 wherein the received electronic mail messages include information describing the site, describing turbines at the site, and describing events associated with each turbine.
29. The method of clauses 25-28 wherein the electronic mail message sent to the site indicates that the RAM data is not valid includes the RAM data.
30. The method of clauses 25-29 including displaying a ticker tape (400) scrolling on a display device, the ticker tape including a name of each site and a symbol adjacent to the name to indicate performance of the turbines at the site.
31. The method of clause 30 wherein an upward pointing symbol (402) indicates better-than-expected performance and a downward pointing symbol (403) indicates worse-than-expected performance.
32. The method of clauses 30-31 wherein a horizontally oriented symbol (404) indicates as-expected performance.
33. The method of clauses 30-32 wherein the indicated performance is relative to contractually guaranteed level of performance.
34. The method of clauses 30-33 wherein the performance relates to megawatt hours.

## Claims

1. A computer system for collecting RAM data from distributed locations, comprising:
a plurality of RAM collection clients (501) that provide a user interface for collecting RAM data, the RAM data including event information, and that send the collected RAM data to a RAM collection server via electronic mail; and
a RAM collection server (520) that receives RAM data sent via electronic mail from RAM collection clients, that validates the received RAM data, that sends a message to the RAM collection clients indicating whether the received RAM data is valid, and that stores valid RAM data in a RAM database.

2. The computer system of claim 1 wherein a RAM collection client (510) receives from the RAM collection server (520) a list of acceptable values (524) for RAM data and wherein the RAM collection client uses the list of acceptable values to filter values entered by a user.

3. The computer system of claim 1 or 2 wherein a RAM collection client (510) collects data covering sequential periods and does not allow collecting of RAM data for a period unless RAM data for the prior period was collected.

4. The computer system of claim 1, 2 or 3 wherein a RAM collection client (510) stores collected RAM data locally (515) until a user indicates to send the collected RAM data.

5. The computer system of any preceding claim wherein a RAM collection client (510) reports when a electronic mail message is received from the RAM collection server (520) indicating that the received RAM data is not valid (1208).

6. The computer system of any preceding claim wherein the RAM collection server (520) validates the received RAM data using business rules stored in a table (702).

7. The computer system of any preceding claim wherein the RAM collection server (520) displays a ticker tape (400) scrolling on a display device, the ticker tape including a name of each site and a symbol adjacent to the name to indicate performance of the turbines at the site.

8. The computer system of any preceding claim wherein a RAM collection client (510) includes:
inputting a value for a field, the input value being in a list of acceptable values for the field;
receiving from a remote computer a new list of acceptable values for the field; and
inputting a value for the field, the input value being in the new list of acceptable values
whereby the acceptable values are dynamically changed (1001-1004) when the new list is received from the remote computer.

9. The computer system of claim 8 wherein the new list of acceptable values is received via an electronic mail message sent from the remote computer.

10. The computer system of claims 8 or 9 wherein the inputting of a value includes displaying a list of acceptable values.
